# EUROPEAN PATENT APPLICATION

(11) **EP 3 996 023 A1**
(43) Date of publication of application: **11.05.2022**
(21) Application number: 21190383.6
(22) Date of filing: 09.08.2021
(51) Int. Cl.: G06Q 30/06

(54) **METHOD AND APPARATUS FOR PROCESSING ORDER INFORMATION, ELECTRONIC DEVICE, AND STORAGE MEDIUM**

(30) Priority: 10.11.2020 CN 202011249467
(71) Applicant: Beijing Dajia Internet Information Technology Co., Ltd., Beijing 100085 (CN)
(72) Inventor: JIANG, Yu, Beijing, 100085 (CN)
(74) Representative: Yang, Shu

(57) **Abstract**

A method for processing order information, including: displaying an order confirmation interface of a target commodity in response to an order generating instruction of the target commodity in a live streaming page, the order confirmation interface being configured for displaying commodity attribute information of the target commodity and an order generating manner of the target commodity being a target generating manner; and displaying order processing information in response to a confirmation instruction on the order confirmation interface, the order processing information being used for indicating an order processing result of the target commodity.

## Description

### TECHNICAL FIELD

The present disclosure relates to Internet technologies, and in particular, to a method for processing order information, an electronic device, and a storage medium.

### BACKGROUND

With the rapid development of the Internet technologies, live streaming is widely used and e-commerce live streaming emerges. E-commerce live streaming means that offline physical stores promote and sell their products through a live-streaming platform or a live-streaming software. In the related technology, an anchor can introduce commodities through a live-streaming room, and a viewer in the live-streaming room can watch the live streaming and click on a commodity in a live streaming page for being redirected to a commodity details page to place an order for purchase.

### SUMMARY

The present disclosure provides a method for processing order information, an electronic device, and a storage medium. The technical solutions of the present disclosure are as follows:

According to a first aspect of embodiments of the present disclosure, a method for processing order information is provided, including: displaying an order confirmation interface of a target commodity in response to an order generating instruction of the target commodity in a live streaming page, the order confirmation interface being configured for displaying commodity attribute information of the target commodity and an order generating manner of the target commodity being a target generating manner; and displaying order processing information in response to a confirmation instruction on the order confirmation interface, the order processing information being used for indicating an order processing result of the target commodity.

According to a second aspect of the embodiments of the present disclosure, an electronic device is provided, including: a processor; and a memory configured to store an instruction executable by the processor, wherein the processor is configured to execute the instructions to cause the electronic device to perform following steps: displaying an order confirmation interface of a target commodity in response to an order generating instruction of the target commodity in a live streaming page, the order confirmation interface being configured for displaying commodity attribute information of the target commodity and an order generating manner of the target commodity being a target generating manner; and displaying order processing information in response to a confirmation instruction on the order confirmation interface, the order processing information being used for indicating an order processing result of the target commodity.

According to a third aspect of the embodiments of the present disclosure, a non-transitory storage medium is provided, wherein when an instruction in the storage medium is executed by a processor of an electronic device, the electronic device is controlled to perform following steps: displaying an order confirmation interface of a target commodity in response to an order generating instruction of the target commodity in a live streaming page, the order confirmation interface being configured for displaying commodity attribute information of the target commodity and an order generating manner of the target commodity being a target generating manner; and displaying order processing information in response to a confirmation instruction on the order confirmation interface, the order processing information being used for indicating an order processing result of the target commodity.

According to a fourth aspect of the embodiments of the present disclosure, an apparatus for processing order information is provided. The apparatus including: a first interface display module, which is configured to display an order confirmation interface of a target commodity in response to an order generating instruction of the target commodity in a live streaming page, wherein the order confirmation interface is configured for displaying commodity attribute information of the target commodity and an order generating manner of the target commodity is a target generating manner; and a second interface display module, which is configured to display order processing information in response to a confirmation instruction on the order confirmation interface, the order processing information being used for indicating an order processing result of the target commodity.

### BRIEF DESCRIPTION OF THE DRAWINGS

The accompanying drawings, which are incorporated in and constitute a part of this description, illustrate the embodiments of the present disclosure and together with the description, serve to explain the principles of the present disclosure.
FIG. 1 is a diagram of an application environment of a method for processing order information according to an embodiment of the present disclosure;
FIG. 2 is a flowchart of a method for processing order information according to an embodiment of the present disclosure;
FIG. 3 is a schematic diagram of steps of responding to an order generating instruction according to an embodiment of the present disclosure;
FIG. 4 is a schematic diagram of steps of responding to a confirmation instruction according to an embodiment of the present disclosure;
FIG. 5 is a flowchart of another method for processing order information according to an embodiment of the present disclosure;
FIG. 6 is a flowchart of still another method for processing order information according to an embodiment of the present disclosure;
FIG. 7 is an interaction schematic diagram of displaying broadcast information according to an embodiment of the present disclosure;
FIG. 8 is a schematic diagram of setting an order generating manner according to an embodiment of the present disclosure;
FIG. 9 is an interaction schematic diagram of a method for processing order information according to an embodiment of the present disclosure;
FIG. 10 is a schematic diagram of a live streaming interface according to an embodiment of the present disclosure;
FIG. 11 is a schematic diagram of another live streaming interface according to an embodiment of the present disclosure;
FIG. 12 is a schematic diagram of an attribute information confirming interface according to an embodiment of the present disclosure;
FIG. 13 is a schematic diagram of displaying a target commodity control in a live streaming interface according to an embodiment of the present disclosure;
FIG. 14 is a schematic diagram of an attribute information editing page according to an embodiment of the present disclosure;
FIG. 15 is a schematic diagram of an order confirmation interface according to an embodiment of the present disclosure;
FIG. 16 is a schematic diagram of an order completion interface according to an embodiment of the present disclosure;
FIG. 17 is a schematic diagram of an order information editing page according to an embodiment of the present disclosure;
FIG. 18 is a block diagram of an apparatus for processing order information according to an embodiment of the present disclosure; and
FIG. 19 is a diagram of an internal structure of an electronic device according to an embodiment of the present disclosure.

### DETAILED DESCRIPTION

To make those of ordinary skill in the art better understand the technical solutions of the present disclosure, the following clearly and completely describes the technical solutions in the embodiments of the present disclosure with reference to the accompanying drawings.

In the related technology of E-commerce live streaming, an anchor introduces commodities through a live-streaming room, and a viewer in the live-streaming room watches the live streaming and clicks on a commodity in a live streaming page to be redirected to a commodity details page for placing order. However, at present, placing an order for a commodity during the e-commerce live streaming by jumping to the commodity details page would cause a waste of traffic for jumping to the commodity details page; moreover, the jumping process takes a certain amount of time, which leads to a waste of traffic in the order placing process and a low order generating efficiency.

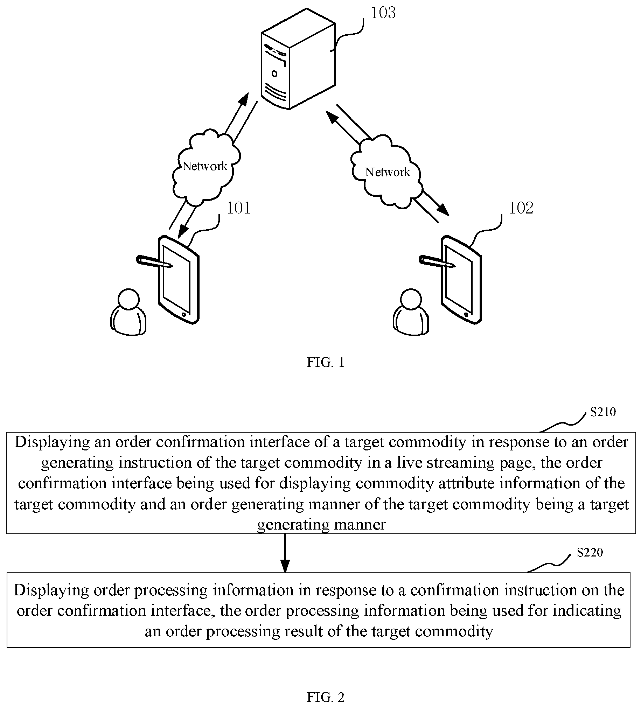

A method for processing order information provided in the present disclosure may be applied to an application environment shown in FIG. 1. As shown in FIG. 1, the application environment includes: a first terminal 101, a second terminal 102, and a server 103, wherein both the first terminal 101 and the second terminal 102 can be connected to the server 103 via a network for data interaction. In some embodiments, the first terminal 101 is a terminal used by an anchor in an e-commerce live streaming process, and the second terminal 102 is a terminal used by a viewer in the e-commerce live streaming process. The first terminal 101 and the second terminal 102 are both installed with a live streaming application, and the server 103 is a backend server corresponding to the live streaming application. In some embodiments, the first terminal 101 and the second terminal 102 can be used by an anchor to initiate a live streaming, or may be used by a viewer to watch the live streaming. That is, the anchor can initiate the live streaming by the first terminal 101 and can also view a live streaming initiated by other anchor; and the viewer can watch the live streaming initiated by an anchor by the second terminal 102 and can also initiate a live streaming by the second terminal 102. In this embodiment, for ease of description, that the first terminal 101 is a terminal used by an anchor and the second terminal 102 is a terminal used by a viewer is taken as an example for description. The first terminal 101 and the second terminal 102 may be, but are not limited to, various personal computers, laptops, smartphones, tablets, and portable wearable devices. The server 103 is a standalone server or a server cluster consisting of multiple servers.

The method for processing order information provided in this embodiment can be applied to the first terminal 101 (i.e., the terminal used by an anchor account that performs a live streaming in the e-commerce live streaming process) and the second terminal 102 (i.e., the terminal used by a viewer account that watches the live streaming), and can also be applied to the server 103 and implemented through interaction with the first terminal 101 and the second terminal 102.

FIG. 2 is a flowchart of a method for processing order information according to an embodiment of the present disclosure. As shown in FIG. 2, that the method is applied to a live streaming application (that is the first terminal 101 or the second terminal 102) is used as an example for description. The method includes the following steps.

In step S210, an order confirmation interface of a target commodity is displayed in response to an order generating instruction for the target commodity displayed in a live streaming page, the order confirmation interface being configured for displaying commodity attribute information and an order generating manner of the target commodity being a target generating manner.

In some embodiments, an order confirmation interface of a target commodity is displayed in response to an order generating instruction of a first account for the target commodity displayed in a live streaming page.

The order confirmation interface is configured for displaying commodity attribute information set by a second account for the target commodity. In some embodiments, the second account is the anchor account that initiates live streaming in e-commerce live streaming, and the first account is the viewer account that watches the live streaming. The order generating instruction is an instruction or a command for commanding the client to display the order confirmation interface, and the order confirmation interface is a page which is configured for displaying commodity information so that the first account watching the live streaming confirms the commodity information. In some embodiments, the commodity information may include the commodity attribute information set for the target commodity by the second account initiating the live streaming, and the commodity attribute information includes, but is not limited to, the price, category, model, and the like of the target commodity. That the order generating manner of the target commodity is the target generating manner means the order generating manner of the target commodity is a shortcut generating manner or a one-click generating manner. In some embodiments, the viewer watching the live streaming already has a comprehensive understanding of the commodity information through the introduction in the live streaming. Therefore, the live streaming page provides an entrance to place a quick order (i.e., it is unnecessary to jump to the commodity details page during the order placing process) for the target commodity. The entrance can be a control or pendant displayed in the live streaming page for the quick order. The control or pendant can carry and display a commodity picture, commodity name or other relevant information of the target commodity.

For example, in the e-commerce live streaming, when the first account watching the live streaming is interested in and wants to buy the target commodity introduced in the live streaming, the viewer can click on the pendant or the control for quick order of the target commodity in the live streaming page, to trigger an order generating instruction for the target commodity. The client then responds to the order generating instruction of the first account for the target commodity and displays the order confirmation interface of the target commodity, so that the first account can confirm the commodity attribute information through the order confirmation interface.

In step S220, order processing information is displayed in response to a confirmation instruction on the order confirmation interface, the order processing information being used for indicating an order processing result of the target commodity.

In some embodiments, order processing information is displayed in response to a confirmation instruction of the first account for the target commodity.

The confirmation instruction is an instruction or a command of the first account for confirming an order of the target commodity. The instruction or command is used for instructing the client to display the order processing information. The order processing information is used for indicating an order processing result of the target commodity, including a result of successful order processing of the target commodity or a result of failed order processing of the target commodity. In some embodiments, after the client responds to the order generating instruction of the first account watching the live streaming for the target commodity and displays the order confirmation interface of the target commodity, the client may further receive the confirmation instruction initiated by the first account for the target commodity based on the order confirmation interface, thereby responding to the confirmation instruction and displaying the order processing information.

According to the foregoing method for processing order information, the client displays the order confirmation interface of the target commodity in response to the order generating instruction of the first account for the target commodity displayed in the live streaming page, and displays the order processing information in response to the confirmation instruction of the first account for the target commodity. The first account watching live streaming does not need to jump to a commodity details page during placing an order in an e-commerce live streaming process, which not only saves the traffic for displaying the commodity details page but also saves the time of jumping, thus improving the order generating efficiency.

In some embodiments of the present disclosure, before the response to the confirmation instruction of the first account for the target commodity in step S220, an order editing interface is displayed in response to an order editing instruction for the target commodity, and edited commodity attribute information is acquired according to an editing operation on the order editing interface. That is, the order editing interface is displayed according to the order editing instruction in response to the order editing instruction of the first account for the target commodity, and edited commodity attribute information is acquired through the order editing interface.

The order editing instruction is an instruction or a command for instructing the client to display the order editing interface, and the order editing interface is a page for editing the commodity attribute information so as to acquire the edited commodity attribute information. Since the same commodity may have different categories, models and other attribute information, such as flavor, color, size, etc., and the different accounts may purchase different quantities of the commodity, the first account can select needed flavor, color or size via the order editing interface, and the selected flavor, color or size is the edited commodity attribute information which can be used for generating the order of the target commodity.

In some embodiments, before responding to the confirmation instruction of the first account for the target commodity and displaying the order processing information, the client may further receive an order editing instruction for the target commodity from the first account, and display the order editing interface in response to the order editing instruction, so that the first account can edit the commodity attribute information of the target commodity through the order editing interface based on its own needs, thereby enabling the client to obtain the commodity attribute information edited by the first account watching the live streaming, so as to meet the needs of the user of first account watching the live streaming.

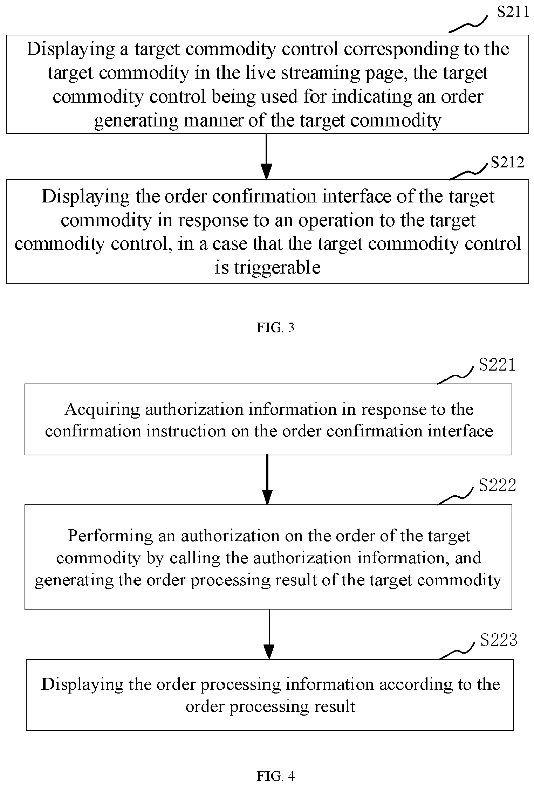

In some embodiments, as shown in FIG. 3, displaying the order confirmation interface of the target commodity in response to an order generating instruction for the target commodity displayed in a live streaming page of step S2 10includes the following steps:

In step S211, a target commodity control is displayed in a live streaming page.

The target commodity control is configured for indicating an order generating manner of the target commodity. In some embodiments, the order generating manner of the target commodity refers to the target generating manner, that is, the order generating manner of the target commodity is a shortcut generating manner. That is, the order of the target commodity can be generated with one click by triggering the target commodity control displayed in the live streaming page. The order can be generated without jumping to the commodity details page of the target commodity. The commodity attribute of the target commodity may be a commodity picture or commodity name and other relevant information of the of the target commodity, such as a commodity price of the target commodity.

In step S212, the order confirmation interface of the target commodity is displayed in response to an operation to the target commodity control, in a case that the target commodity control is triggerable.

In some embodiments, the order confirmation interface of the target commodity is displayed in response to a click operation on the target commodity control of the first account, in a case that the target commodity control is triggerable.

The target commodity control includes a triggerable state and a non-triggerable state. That target commodity control is in the triggerable state refers to that the target commodity control is in a state that it can be clicked, and the order generating instruction can be triggered by clicking the target commodity control. Correspondingly, that target commodity control is in the non-triggerable state refers to that the target commodity control is in a state that it cannot be clicked, and the order generating instruction cannot be triggered by clicking the target commodity control. In some embodiments, the trigger status of the target commodity control can usually be identified by a color. For example, when the target commodity control is in the triggerable state, it can be identified by a bright color and the corresponding function can be triggered by clicking on the control. When the target commodity control is in the non-triggerable state, it is usually identified by a dark color such as a gray color and the corresponding function cannot be triggered by clicking on the control. In a case that the target commodity control is triggerable, the first account initiates an order generating instruction for the target commodity through the target commodity control, the click operation of the first account for the target commodity displayed in the live streaming page is responded and the order generating instruction is triggered. The order confirmation interface of the target commodity is displayed in response to the order generating instruction.

In some embodiments, the target commodity control further indicates an order triggering time of the target commodity. The target commodity control is set to be triggerable in response to the order triggering time is arrived. That is, a state of the target commodity control is controlled according to the order triggering time. In a case that the target commodity control is triggerable, the order generating instruction is triggered in response to the click operation of the first account to the target commodity displayed in the live streaming page. The order confirmation interface of the target commodity is displayed in response to the order generating instruction.

The order triggering time of the target commodity refers to an effective time for the target commodity control entering the triggerable state, and may be specifically configured through setting information of the target commodity control that is, it is set by technicians according to the actual situation In some embodiments, the triggering state of the target commodity control is controlled according to the order triggering time, that is, the triggering manner of the target commodity control is controlled to be in the non-triggerable state when the order triggering time has not arrived, and the triggering manner of the target commodity control is controlled to be in the triggerable state when the order triggering time arrives.

The target commodity control is displayed in the live streaming page and the order triggering time of the target commodity is set in advance, so that the triggering state of the target commodity control is controlled according to the order triggering time, and triggering state control of the target commodity control is realized. In a case that the target commodity control is triggerable, the order generating instruction of the first account for the target commodity displayed in the live streaming page is responded, and the order confirmation interface of the target commodity is displayed, so that it is convenient for the first account to confirm the order of the target commodity.

In some embodiments of the present disclosure, as shown in FIG. 4, displaying order processing information in response to the confirmation instruction on the order confirmation interface, of step S220 includes the following steps:

In step S221, authorization information is acquired in response to the confirmation instruction for the target commodity.

The authorization information of the first account is acquired in response to the confirmation instruction of the first account for the target commodity.

The confirmation instruction is an instruction or a command of the first account for confirming the order of the target commodity. The authorization information is used for instructing to perform an authorization processing on the order of the target commodity. In some embodiments, the authorization information may be personal information used by the first account for processing the order, for example, a payment manner or payment password used by the first account for the payment of the order. After responding to the order generating instruction for the target commodity from the first account and displaying the order confirmation interface of the target commodity, the client may further receive the confirmation instruction for the target commodity initiated by the first account based on the order confirmation interface, and acquire the authorization information of the first account, thereby performing the authorization processing on the order by calling the authorization information of the target commodity in subsequent steps.

In step S222, an authorization is performed on the order of the target commodity by calling the authorization information and an order processing result of the target commodity is generated.

The order processing result includes a result of successful order processing of the target commodity or a result of failed order processing of the target commodity. In some embodiments, if the authorization is an authorized payment processing for the order, the order processing result includes a result of successful order processing of the target commodity or a result of failed order processing of the target commodity. After the authorization information of the first account is acquired through the foregoing step, the authorization processing can be performed on the order of the target commodity by calling the authorization information of the first account, e.g., paying for the order of the target commodity by calling the authorization information of the first account, to generate an order processing result of the target commodity.

In step S223, order processing information is displayed according to the order processing result.

The order processing information indicates the order processing result of the target commodity. In some embodiments, taking the authorization being the authorized payment as an example, if the order processing result of the target commodity is that payment for the order of the target commodity succeeds, the order processing information displayed correspondingly may be information indicating that the order has been paid; if the order processing result of the target commodity is that payment for the target commodity fails, the order processing information displayed correspondingly may be information indicating that the order has not been paid yet. The content to be displayed may be set according to actual requirements, and is not limited in this embodiment.

The authorization information of the first account is acquired in response to the confirmation instruction of the first account for the target commodity, then authorization is performed on the order of the target commodity by calling the authorization information of the first account, an order processing result of the target commodity is generated, and the order processing information is displayed according to the order processing result of the target commodity, thereby accomplishing a quick processing on the order of the target commodity.

In some embodiments, acquiring authorization information in response to the confirmation instruction for the target commodity of step S221 includes the following step:

In some embodiments, preset authorization information of the first account is acquired in response to the confirmation instruction on the order confirmation interface. That is, preset authorization information of the first account is acquired in response to the confirmation instruction of the first account for the target commodity. In this embodiment, the first account may preset the corresponding authorization information through the client. Therefore, when receiving the confirmation instruction for the target commodity initiated by the first account based on the order confirmation interface, the client may acquire the authorization information preset by the first account, so as to perform the authorization on the order of the target commodity by calling the authorization information of the first account.

In some embodiments, in a case that the first account does not preset the authorization information, an authorization editing interface is displayed in response to the confirmation instruction and the authorization editing interface is an interface for editing authorization information of the first account. The authorization information is acquired according to operations on the authorization editing interface. The authorization editing interface is configured for the first account to edit corresponding authorization information.

In some embodiments, before in response to a confirmation instruction on the order confirmation interface in step S220, the method further includes: preset order address information of the first account is acquired. The order address information of the first account refers to an order delivery address of the first account, that is, a delivery address of the target commodity. In some embodiments, the first account may preset the corresponding order address information through the client. Therefore, when responding to the order generating instruction for the target commodity from the first account watching the live streaming, the client may acquire the order address information preset by the first account and display the order confirmation interface of the target commodity, and then receive the confirmation instruction for the target commodity initiated by the first account based on the order confirmation interface, and respond to the confirmation instruction and process the order correspondingly.

In some embodiments, if the first account does not preset the order address information, when receiving the order generating instruction of the first account for the target commodity, the client jumps to the order address editing interface, so as to acquire edited order address information through the order address editing interface.

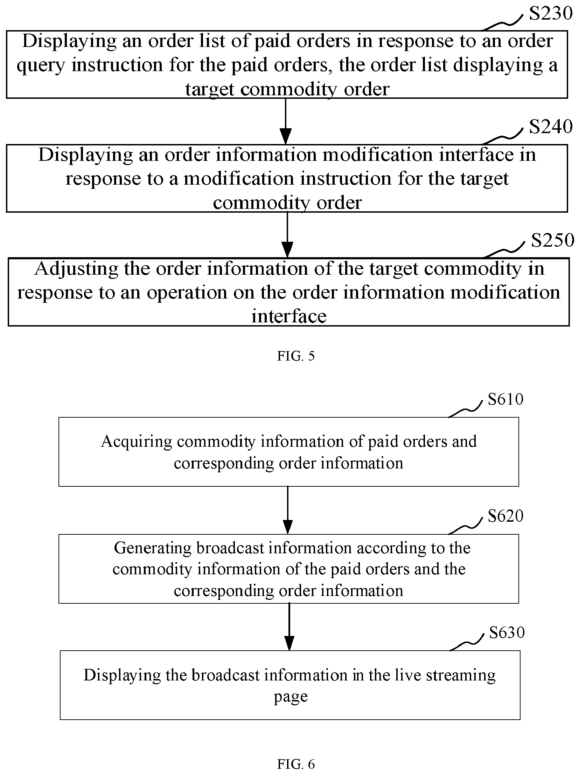

In some embodiments, as shown in FIG. 5, after the order processing information is displayed in step S220, the method may further include the following steps:

In step S230, an order list of paid orders is displayed in response to an order query instruction for the paid orders, the order list displaying a target commodity order.

The order query instruction is an instruction or a command for instructing the client to make an order query. A paid order is an order which has a result of successful order processing after been processed by the client based on the confirmation instruction of the first account for the target commodity. The order list may include one or more orders that meet query criteria. In some embodiments, after the order processing is finished by the method shown in FIG. 2, if the first account needs to modify the order information, the first account can initiate an order query instruction for paid orders through the client, and the client displays the order list of the paid orders in response to the order query instruction, and completes modification of the corresponding order information through the subsequent steps.

In step S240, an order information modification interface is displayed in response to a modification instruction for the target commodity order.

The modification instruction is an instruction or a command used for instructing the client to modify the order information. The target commodity order refers to an order of the target commodity or an order to be modified. The order information modification interface is a page that allows the first account to modify the order information.

In step S250, the order information of the target commodity is adjusted in response to an operation on the order information modification interface.

In some embodiments, order modification information for the target commodity order is acquired through the order information modification interface. The order information of the target commodity is updated according to the order modification information of the target commodity.

The order modification information refers to information for modifying the order, including but not limited to order address information, attribute information of the corresponding commodity in the order, etc. The operation on the order information modification interface includes an adjustment to the address of the target commodity order, an adjustment to the commodity quantity of the target commodity order and so on.

In some embodiments, if the order modification information is the order address information, original order address information in the order is replaced with the modified order address information to complete the update of the order information in the corresponding order. If the order modification information is the attribute information of the corresponding commodity in the order, original commodity attribute information in the order is replaced with the modified commodity attribute information to complete the update of the order information in the corresponding order. The commodity attribute information may refer to the category, model, and the like of a commodity. For example, for food, the commodity attribute information may refer to the flavor, specification, and the like of the commodity; for clothing, the commodity attribute information may refer to the size, color, and the like of the commodity. It can be appreciated that a verification link can be introduced in the process of modifying the commodity attribute information For example, the inventory is checked based on the modified commodity attribute information, i.e., it is determined whether the corresponding commodity exists in the inventory; if the corresponding commodity exists in the inventory, the modification is allowed; otherwise, the modification is not allowed.

In the foregoing embodiment, the order list of the paid orders is displayed in response to the order query instruction for the paid orders, and the order information modification interface is displayed in response to the modification instruction for the target commodity order shown in the order list. Then, the order modification information for the target commodity order is acquired through the order information modification interface, and the order information of the target commodity order is updated based on the order modification information for the target commodity order. In addition to improve the efficiency of order generation, the method further provides the user with the means to modify and improve order information.

In some embodiments, as shown in FIG. 6, after the order processing information is displayed in step S220, the method further includes the following steps:

In step S610, commodity information of paid orders and corresponding order information are acquired.

The paid order refers to an order generated during the current live streaming. The commodity information of the paid order refers to relevant information of the commodity in the paid order, such as the commodity name, the corresponding quantity, etc. The order information may include account information related to the paid order or commodity quantity information. For example, the account information is an account name and account ID of the first account that initiates the order and the commodity quantity information is the quantity of the commodity purchased by the first account.

In step S620, broadcast information is generated according to the commodity information of the paid orders and the corresponding order information.

The broadcast information is displayed in the live streaming page. In some embodiments, the broadcast information may be a combination of the commodity information of the paid order and the corresponding order information. For example, the broadcast information may be in the form of a combination of the account name of the first account which has the paid order and the name and quantity of the commodity corresponding to the order, or may be in other forms.

In step S630, the broadcast information is displayed in the live streaming page.

In some embodiments, the client can acquire commodity information of paid orders and corresponding order information in real time or periodically to generate corresponding broadcast information, and display the broadcast information in the live streaming page in a scrolling display manner. For example, two adjacent pieces of broadcast information are displayed at a certain time interval.

The client acquires the commodity information of the paid orders and the corresponding order information in the current live streaming, generates corresponding broadcast information according to the commodity information of the paid orders and the corresponding order information, and then displays the broadcast information in the live streaming page, thereby realizing information sharing.

In some embodiments, after the broadcast information in the live streaming page is displayed in step 630, a commodity details interface corresponding to the commodity information is displayed in response to a triggering operation to the commodity information in the broadcast information. That is, a commodity details interface corresponding to the commodity information in the broadcast information is displayed in response to a commodity triggering event of the first account for the broadcast information displayed in the live streaming page. The commodity triggering event refers to a triggering event for the corresponding commodity information in the broadcast information displayed in the live streaming page, and the commodity triggering event is triggered by a triggering operation to the commodity information, such as a click operation. The commodity details interface refers to a detailed introduction page of the corresponding commodity information. Since the broadcast information includes the combination of the commodity information of the paid order and the corresponding order information, the first account can click on the broadcast information displayed in the live streaming page after the client displays the broadcast information in the live streaming page. When the client detects that the first account clicks on the commodity information in the broadcast information, the client detects a commodity triggering event and responds to the commodity triggering event, so as to display the commodity details interface corresponding to the commodity information in the broadcast information, thereby realizing quick jump of information.

In some embodiments, the account information includes corresponding account information. In this case, after the broadcast information is displayed in the live streaming page in step S630, an account interface corresponding to an account information is displayed in response to a triggering operation to the account information in the live streaming page. That is, an account interface corresponding to the account information in the broadcast information is displayed in response to an account triggering event of the first account for the broadcast information displayed in the live streaming page. The account triggering event refers to a triggering event for the corresponding account information in the broadcast information displayed in the live streaming page. The account interface refers to a personal homepage corresponding to the account information. In this embodiment, after the client displays the broadcast information in the live streaming page, the first account can click on the broadcast information displayed in the live streaming page. Once detecting that the first account clicks on the account information in the broadcast information, the client detects the account triggering event and responds to the account triggering event, so as to display the personal homepage corresponding to the account information in the broadcast information, thereby realizing quick jump of information.

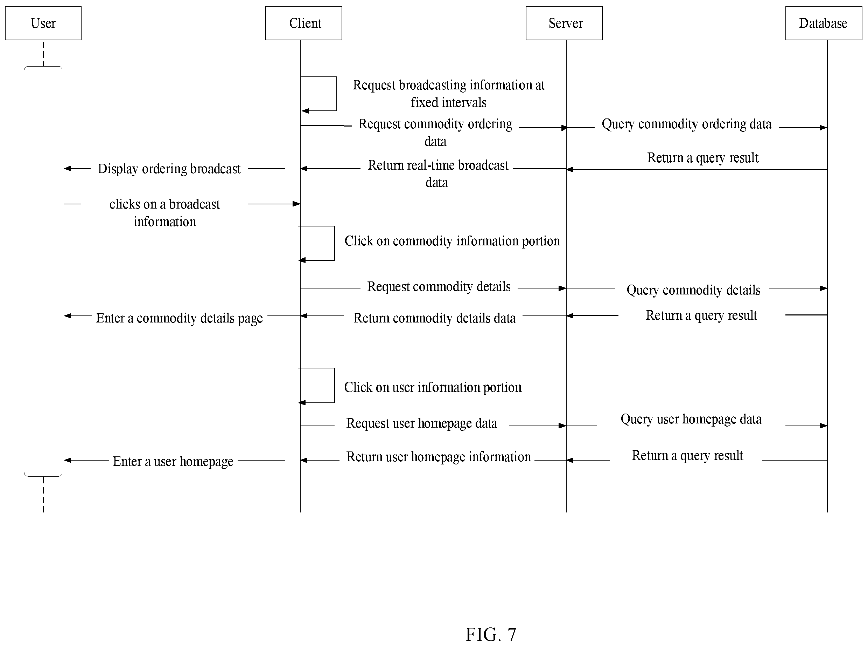

In some embodiments, the client can also display the broadcast information in the live streaming page based on the interaction with the server. As shown in FIG. 7, the client requests broadcast information from the server at fixed intervals (or the server may send broadcast information to the client at fixed intervals). The client requests the order information from the server, after receiving the request, the server queries commodity order data from a database and returns the data to the client (there may be multiple pieces of data, i.e., broadcast information for different commodities (or different users)). After receiving the returned data, the client broadcasts the data in a scrolling manner in a live-streaming room (multiple pieces of broadcast information are displayed at intervals of Is, and each piece of broadcast information is displayed for 2s, and the specific interval time and display time can be changed). After the users (including the anchor user and viewer user) see the broadcast in the live-streaming room, if a user clicks on the commodity information in the broadcast information, the client receives an instruction and then sends a request to the server. The server queries the database and returns the detailed data of the corresponding commodity, and the client jumps to the commodity details page. If the user clicks on the user information in the broadcast information, the client sends a request to the server. The server makes a query and returns personal homepage information of the corresponding user, and the client jumps to the user's personal homepage.

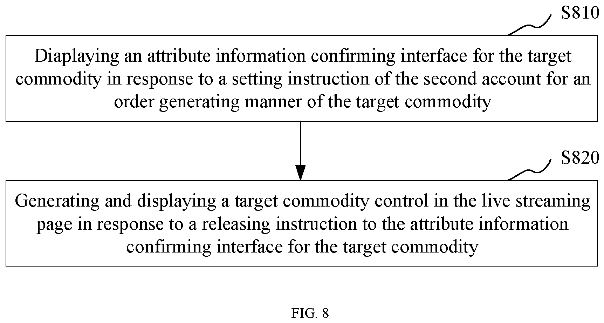

In some embodiments, as shown in FIG. 8, before the response to the order generating instruction for the target commodity displayed in the live streaming page in step S210, the method further includes the following steps:

In step S810, an attribute information confirming interface for the target commodity is displayed in response to a setting instruction of the second account for an order generating manner of the target commodity.

In some embodiments, the order generating manner includes a shortcut order generating manner for the target commodity, which means that there is no need to jump to the commodity details page of the target commodity and the order is generated directly during the order generating process. The setting instruction is an instruction or a command for setting the order generating manner of the target commodity. The attribute information confirming interface is a page for displaying the commodity attribute information of the target commodity and allowing the second account to confirm the displayed commodity attribute information of the target commodity. The commodity attribute information of the target commodity includes, but is not limited to, the price, category, model or quantity of the target commodity, etc. In some embodiments, the anchor account initiating the live streaming, i.e., the second account, may set the order generating manner of the target commodity. In some embodiments, the second account may be provided with an operation entrance for setting the order generating manner of the target commodity. The operation entrance may be set at the position of the corresponding commodity, and the operation entrance is a control or pendant for setting a shortcut order generating manner for the target commodity. When the second account needs to set an order generating manner of a target commodity, the second account clicks on the control or pendant, thereby initiating a setting instruction for the order generating manner of the target commodity. The client responds to the second account's setting instruction for the order generating manner of the target commodity, and displays the attribute information confirming interface for the target commodity.

In step S820, a target commodity control is generated and is displayed in the live streaming page in response to a releasing instruction to the attribute information confirming interface for the target commodity.

The releasing instruction is an instruction or a command for confirming and releasing the commodity attribute information of the target commodity. The target commodity control is used for triggering the order generating instruction. In some embodiments, when the second account confirms the information in the displayed attribute information confirming interface for the target commodity, the second account can click on the corresponding control in the attribute information confirming interface to confirm the information and initiate a corresponding releasing instruction. The client generates a target commodity control in response to the releasing instruction to the attribute information confirming interface for the target commodity and displays the target commodity control in the live streaming page.

In response to the setting instruction of the second account for the order generating manner of the target commodity, the attribute information confirming interface for the target commodity is displayed, and in response to the releasing instruction to the attribute information confirming interface for the target commodity, the target commodity control is generated and displayed in the live streaming page, thus providing the first account with a shortcut manner of generating the order of the target commodity. Because it is unnecessary to jump to the commodity details page during the order generating process, the method not only saves the traffic for displaying the commodity details page, but also saves the time for redirection and improves the order generating efficiency.

In some embodiments, before the response to the releasing instruction to the attribute information confirming interface for the target commodity in step S820, the method further includes the following steps:

In some embodiments, an information editing page for commodity attribute information of the target commodity is displayed in response to an information editing instruction of the second account for the commodity attribute information of the target commodity; and acquiring editing content for the commodity attribute information of the target commodity through the information editing page. The information editing instruction is an instruction or a command for editing the commodity attribute information of the target commodity. The information editing page is a page for editing specific content. In this embodiment, when the second account needs to edit the commodity attribute information of the target commodity displayed in the attribute information confirming interface for the target commodity, for example, when the second account needs to modify the commodity price of the target commodity, set a purchase quantity limit for the target commodity, or set the model of the target commodity, the second client can initiate a corresponding information editing instruction based on the attribute information confirming interface. In response to the information editing instruction, the client displays the information editing page for the commodity attribute information of the target commodity, so that the second account can edit the commodity attribute information of the target commodity through the information editing page. The client then acquires the editing content of the commodity attribute information of the target commodity from the second account through the information editing page, and generates the target commodity control based on the editing content in response to the releasing instruction to the attribute information confirming interface for the target commodity, so as to display the target commodity control in the live streaming page.

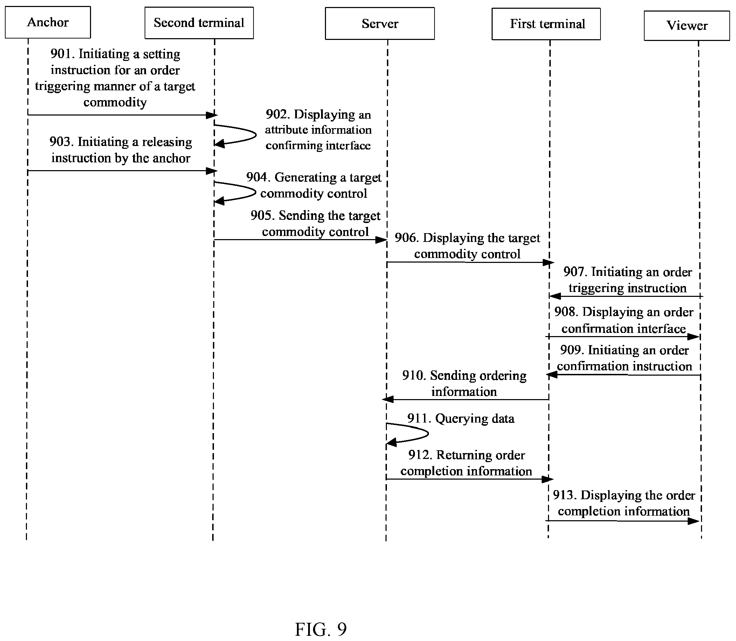

In some embodiments, as shown in FIG. 9, an e-commerce live streaming scenario is used as an example, the scenario includes an anchor account, a viewer account, a first terminal used by a viewer, a second terminal used by an anchor, and a server. The first terminal and the second terminal are both installed with a client of a live streaming application. In this embodiment, the method for processing order information is implemented based on interaction between the terminals and the server, and may include the following steps:

In step 901, before or during live streaming, an anchor initiates a setting instruction for an order generating manner of a target commodity through a second terminal.

In some embodiments, an operation entrance for setting the order generating manner of the target commodity is provided on a live streaming page. The operation entrance may be set at a position of the corresponding commodity, and the operation entrance may specifically be a control or pendant for setting a shortcut order generating manner for the target commodity.

In step 902, the second terminal displays an attribute information confirming interface for the target commodity.

In step 903, the anchor initiates a releasing instruction based on the displayed attribute information confirming interface for the target commodity.

In step 904, the second terminal generates a target commodity control.

In step 905, the second terminal sends the target commodity control to a server.

In step 906, the server displays the target commodity control in a live streaming page through a first terminal.

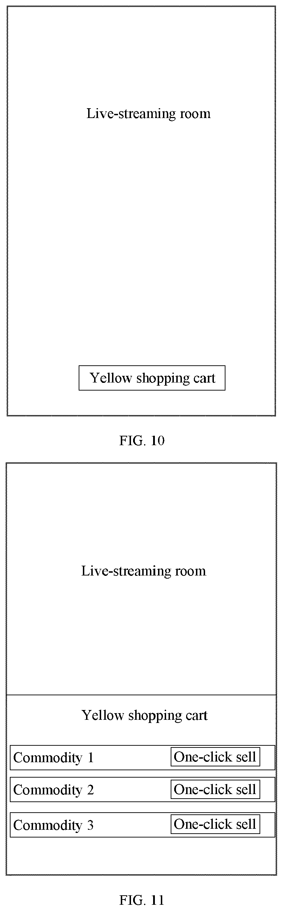

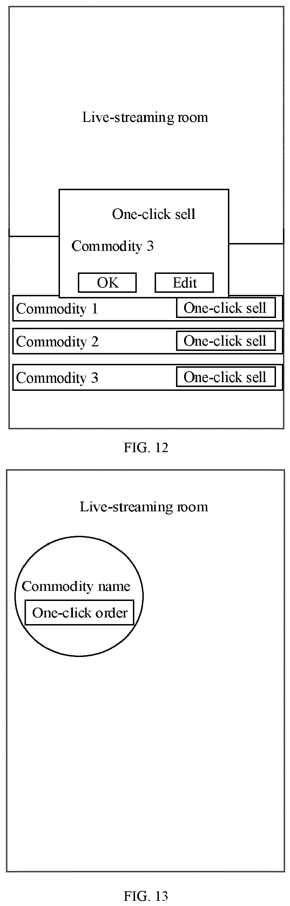

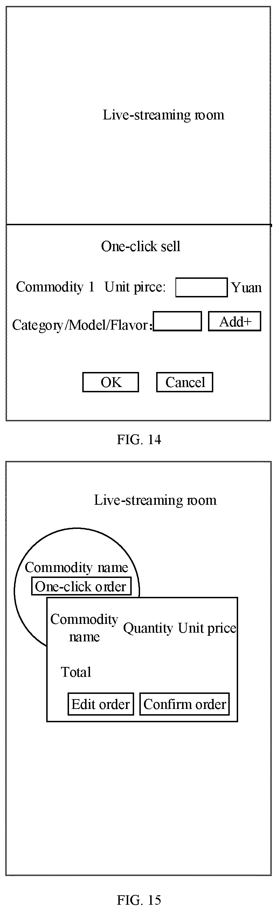

In some embodiments, as shown in FIG. 10, before or during the live streaming, the anchor can click on a "Yellow shopping cart" control in a live streaming page. Then, the live streaming page displays a commodity list as shown in FIG. 11, and each commodity is provided with a control or a pendant for setting an order generating manner of the commodity, i.e., the "One-click sell" control shown in FIG. 11. If the anchor needs to set the order generating manner of the commodity, the anchor can click on the "One-click sell" control at the commodity to initiate the setting instruction for the order generating manner of the commodity. The second terminal displays an attribute information confirming interface for the corresponding commodity, as shown in FIG. 12. The anchor can directly initiate a releasing instruction based on the displayed attribute information confirming interface for the commodity (i.e., clicking on an "OK" control in FIG. 12), so that the second terminal generates a target commodity control and sends the target commodity control to the first terminal via the server. The target commodity control is displayed in the corresponding live streaming page, and the target commodity control can be displayed in the form of a circular area as shown in FIG. 13. The anchor can also initiate an information editing instruction for the attribute information based on the displayed attribute information confirming interface for the commodity (i.e., clicking on an "Edit" control in FIG. 12), and in this case, the second terminal displays the page as shown in FIG. 14. The anchor can edit the attribute information of the commodity through this page, and configure an order triggering time through this page. After finishing the editing and configuration, the anchor can initiate a releasing instruction for the edited content and configuration information (i.e., clicking on the "OK" control in FIG. 14), so that the second terminal generates the target commodity control and sends the target commodity control to the first terminal via the server. The target commodity control is displayed on the corresponding live streaming page, i.e., the page shown in FIG. 13. In this embodiment, if the anchor clicks on a "Cancel" control in the page shown in FIG. 14, the second terminal closes the page for setting the order generating manner and displays the live streaming page.

In step 907, the viewer initiates an order generating instruction based on the target commodity control shown in the live streaming page displayed by the first terminal.

In step 908, the first terminal displays an order confirmation interface of the target commodity.

In step 909, the viewer initiates a confirmation instruction based on the displayed order confirmation interface.

In step 910, the first terminal sends ordering information to the server based on the confirmation instruction.

In step 911, the server queries data according to the ordering information.

In step 912, the server returns order processing information to the first terminal based on the queried data.

In step 913, the first terminal displays the order processing information.

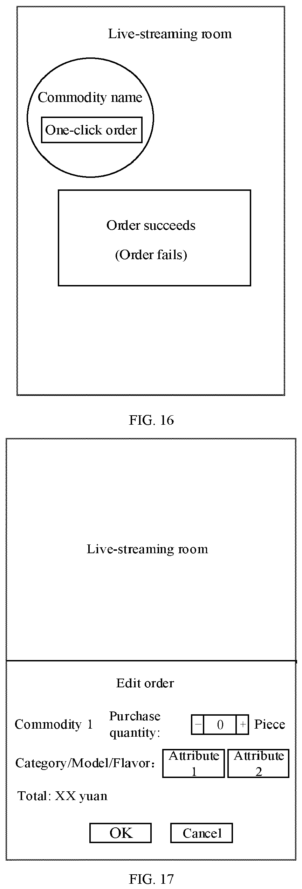

In some embodiments, when the viewer clicks on the target commodity control in the page shown in FIG. 13 displayed by the first terminal (i.e., the "One-click order" control shown in FIG. 13), the order generating instruction for the target commodity is initiated. The first terminal displays the order confirmation interface of the target commodity as shown in FIG. 15. The viewer can initiate a confirmation instruction based on the displayed order confirmation interface (i.e., clicking on a "Confirm order" control in FIG. 15), so that the first terminal displays a page of order processing information as shown in FIG. 16. The viewer can also initiate an order editing instruction for the order information based on the displayed order confirmation interface (i.e., clicking on an "Edit order" control in FIG. 15), and the first terminal displays the page as shown in FIG. 17. The viewer can edit the order information of the commodity through this page, i.e., edit the quantity, category, model or flavor of the commodity in the order. After finishing editing, the viewer can initiate the confirmation instruction for the order information (i.e., clicking on a "OK" control in FIG. 17), so that the first terminal displays the page of the order processing information as shown in FIG. 16. In this embodiment, if the viewer clicks on a "Cancel" control in the page shown in FIG. 17, the first terminal closes the order page and displays the live streaming page of the current live streaming.

In the foregoing method for processing order information, the anchor initiates the setting instruction for the order generating manner of the target commodity, and the corresponding target commodity is generated and displayed to the viewers, so that the viewers can place orders for the target commodity with one click through the displayed target commodity control. It is unnecessary to jump to the commodity details page of the target commodity, which not only saves the traffic for displaying the commodity details page but also saves the time for redirection, thereby improving the order generating efficiency.

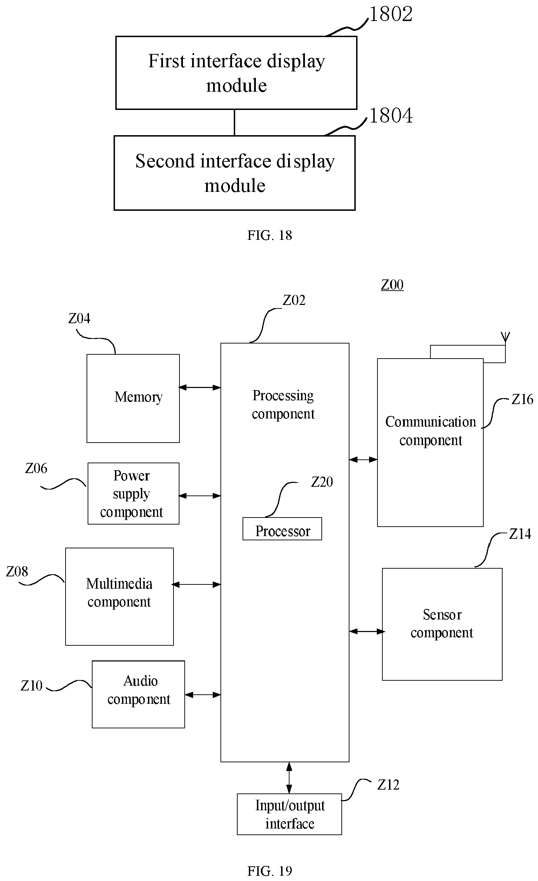

FIG. 18 is a block diagram of an apparatus for processing order information according to an embodiment of the present disclosure. Referring to FIG. 18, the apparatus includes a first interface display module 1802 and a second interface display module 1804.

The first interface display module 1802 is configured to display an order confirmation interface of a target commodity in response to an order generating instruction of a first account for the target commodity displayed in a live streaming page, the order confirmation interface being used for displaying commodity attribute information set by a second account for the target commodity and an order generating manner of the target commodity being a target generating manner.

The second interface display module 1804 is configured to display order processing information in response to a confirmation instruction on the order confirmation interface, the order processing information being used for indicating an order processing result of the target commodity.

In some embodiments, the apparatus further includes: an order editing interface display module, which is configured to display an order editing interface in response to an order editing instruction for the target commodity, and acquire edited commodity attribute information through the order editing interface.

In some embodiments, the first interface display module 1802 is configured to display a target commodity control corresponding to the target commodity in the live streaming page, target commodity control being configured for indicating an order generating manner of the target commodity, and display an order confirmation interface of the target commodity in response to an operation to the target commodity control, in a case that the target commodity control is triggerable.

In some embodiments, the target commodity control further indicates an order triggering time of the target commodity. The first interface display module 1802 is configured to set the target commodity control to be triggerable in response to the order triggering time is arrived.

In some embodiments, the second interface display module 1804 includes: an authorization information acquiring unit, which is configured to acquire authorization information in response to the confirmation instruction for the target commodity; an authorization processing unit, which is configured to perform authorization on the order of the target commodity by calling the authorization information and generate an order processing result of the target commodity; and an order processing information display unit, which is configured to display the order processing information according to the order processing result of the target commodity.

In some embodiments, the authorization information acquiring unit is configured to: acquire preset authorization information of the first account in response to the confirmation instruction on the order confirmation interface, or display an authorization editing interface in response to the confirmation instruction on the order confirmation interface and acquire edited authorization information through the authorization editing interface.

In some embodiments, the apparatus further includes: a query module, which is configured to display an order list of paid orders in response to an order query instruction for the paid orders, the order list displaying a target commodity order; an order information modification module, which is configured to display an order information modification interface in response to a modification instruction for a target commodity order; an order modification information acquiring module, which is configured to adjust order information of the target commodity order in response to an operation on the order information modification interface.

In some embodiments, the apparatus further includes: an information acquiring module, which is configured to acquire commodity information of a paid order and corresponding order information; a broadcast information generating module, which is configured to generate corresponding broadcast information according to the commodity information of the paid order and the corresponding order information; and a display module, which is configured to display the broadcast information in the live streaming page.

In some embodiments, the apparatus further includes a commodity triggering event responding module, which is configured to display a commodity details interface corresponding to the commodity information in response to a triggering operation to commodity information in the broadcast information.

In some embodiments the apparatus further includes an account triggering event responding module, which is configured to display an account interface corresponding to the account information in response to a triggering operation to the account information in the live streaming page.

Specific manners of operations performed by the modules in the apparatus in the foregoing embodiment have been described in detail in the embodiments of the related method, and details are not described herein again.

FIG. 19 is a block diagram of an electronic device Z00 for processing order information according to an embodiment of the present disclosure. For example, the electronic device Z00 may be a mobile phone, a computer, a digital broadcast terminal, a message transceiving device, a gaming console, a tablet device, a medical device, a fitness device, a personal digital assistant, and the like.

Referring to FIG. 19, the electronic device Z00 may include one or more of the following components: a processing component Z02, a memory Z04, a power supply component Z06, a multimedia component Z08, an audio component Z10, an input/output (I/O) interface Z12, a sensor component Z14, and a communication component Z16.

The processing component Z02 typically controls the overall operation of the electronic device Z00, for example, operations associated with display, phone calls, data communications, camera operations, and recording operations. The processing component Z02 may include one or more processors Z20 to execute instructions to complete all or some of the steps of the method described above. In addition, the processing component Z02 may include one or more modules that facilitate interaction between the processing component Z02 and other components. For example, the processing component Z02 may include a multimedia module to facilitate interaction between the multimedia component Z08 and the processing component Z02.

The memory Z04 is configured to store various types of data to support operations on the electronic device Z00. Examples of such data include instructions for any application or method operating on the electronic device Z00, contact data, phone book data, messages, pictures, videos, etc. The memory Z04 may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component Z06 provides power to the various components of the electronic device Z00.The power component Z06 may include a power management system, one or more power supplies, and other components associated with power generating, management, and distribution for the electronic device Z00.

The multimedia component Z08 includes a screen providing an output interface between the electronic device Z00 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense the boundaries of the touch or swipe action, but also detect the duration and pressure associated with the touch or swipe action. In some embodiments, the multimedia component Z08 includes a front-facing camera and/or a rear-facing camera. The front-facing camera and/or the rear-facing camera can receive external multimedia data when the electronic device Z00 is in an operating mode, such as a shooting mode or a video mode. Each front-facing camera and rear-facing camera may be a fixed optical lens system or have a focal length and optical zoom capability.

The audio component Z10 is configured to output and/or input audio signals. For example, the audio component Z10 includes a microphone (MIC) configured to receive external audio signals when the electronic device Z00 is in an operating mode, such as a call mode, a recording mode, and a voice recognition mode. The received audio signal may be further stored in the memory Z04 or sent via the communication component Z16. In some embodiments, the audio component Z10 further includes a speaker for outputting audio signals.

The I/O interface Z12 provides an interface between the processing component Z02 and a peripheral interface module, and the peripheral interface module may be a keyboard, a click wheel, a button, etc. The buttons may include, but are not limited to: a home button, a volume button, a start button, and a lock button.

The sensor component Z14 includes one or more sensors for providing status assessment of various aspects of the electronic device Z00.For example, the sensor component Z14 may detect an on/off state of the electronic device Z00, and relative positioning of components, for example, the components are the display and keypad of the electronic device Z00.The sensor component Z14 may also detect a position change of the electronic device Z00 or a component of the electronic device Z00, the presence or absence of user contact with the electronic device Z00, orientation or acceleration/deceleration of the electronic device Z00, and a temperature change of the electronic device Z00.The sensor component Z14 may include a proximity sensor configured to detect the presence of nearby objects without any physical contact. The sensor component Z14 may also include an optical sensor, such as a CMOS or CCD image sensor, for use in imaging applications. In some embodiments, the sensor component Z14 may also include an accelerometer sensor, a gyroscope sensor, a magnetic sensor, a pressure sensor, or a temperature sensor.

The communication component Z16 is configured to facilitate communication between the electronic device Z00 and other devices by wired or wireless means. The electronic device Z00 may access a wireless network based on a communication standard, such as WiFi, a carrier network (e.g., 2G, 3G, 4G, or 5G), or a combination thereof. In some embodiments, the communication component Z16 receives broadcast signals or broadcast-related information from an external broadcast management system via a broadcast channel. In some embodiments, the communication component Z16 further includes a near-field communication (NFC) module to facilitate short-range communication. For example, the NFC module may be implemented based on the radio frequency identification (RFID) technology, infrared data association (IrDA) technology, ultra-wideband (UWB) technology, Bluetooth (BT) technology, and other technologies.

In some embodiments, the electronic device Z00 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the method described above.

In some embodiments, a non-transitory computer readable storage medium including instructions is further provided, for example, the memory Z04 including instructions, the instructions being executed by the processor Z20 of the electronic device Z00 to accomplish the method described above. For example, the non-transitory computer readable storage medium may be a ROM, a random access memory (RAM), a CD-ROM, a magnetic tape, a floppy disk, an optical data storage device, or the like. The instruction can be executed by the processor Z20 of the electronic device Z00 to the method described above.

A person skilled in the art can easily think of other implementation solutions of the present disclosure after considering the specification and practicing the disclosure herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

## Claims

1. A method for processing order information, applied to a live streaming application of a terminal, the method comprising:
displaying (S210) an order confirmation interface of a target commodity in response to an order generating instruction of the target commodity in a live streaming page, wherein the order confirmation interface is configured for displaying commodity attribute information of the target commodity and an order generating manner of the target commodity is a target generating manner; and
displaying (S220) order processing information in response to a confirmation instruction on the order confirmation interface, the order processing information being used for indicating an order processing result of the target commodity.

2. The method according to claim 1, further comprising:
displaying an order editing interface in response to an order editing instruction for the target commodity; and
acquiring edited commodity attribute information according to an editing operation on the order editing interface.

3. The method according to claim 1, wherein said displaying the order confirmation interface of the target commodity in response to the order generating instruction of the target commodity in the live streaming page comprises:
displaying (S211) a target commodity control corresponding to the target commodity in the live streaming page, the target commodity control being configured for indicating an order generating manner of the target commodity; and
displaying (S212) the order confirmation interface of the target commodity in response to an operation to the target commodity control, in a case that the target commodity control is triggerable.

4. The method according to claim 3, wherein the target commodity control is configured for indicating an order triggering time of the target commodity; and the method further comprises:
setting the target commodity control to be triggerable in response to the order triggering time arrives.

5. The method according to claim 1, wherein said displaying order processing information in response to the confirmation instruction on the order confirmation interface comprises:
acquiring (S221) authorization informationin response to the confirmation instruction on the order confirmation interface;
performing (S222) an authorization on an order of the target commodity by calling the authorization information, and generating the order processing result of the target commodity; and
displaying (S223) the order processing information according to the order processing result.

6. The method according to claim 5, wherein said acquiring the authorization information in response to the confirmation instruction on the order confirmation interface comprises:
acquiring preset authorization information in response to the confirmation instruction on the order confirmation interface; or
displaying an authorization editing interface in response to the confirmation instruction on the order confirmation interface, and acquiring the authorization information according to an operation on the authorization editing interface.

7. The method according to claim 1, further comprising:
displaying (S230) an order list of paid orders in response to an order query instruction for the paid orders, wherein a target commodity order is displayed in the order list;
displaying (S240) an order information modification interface in response to a modification instruction for the target commodity order; and
adjusting (S250) an order information of the target commodity in response to an operation on the order information modification interface.

8. The method according to claim 1, further comprising:
acquiring (S610) commodity information of paid orders and corresponding order information;
generating (S620) broadcast information according to the commodity information of the paid orders and the corresponding order information; and
displaying (S630) the broadcast information in the live streaming page.

9. The method according to claim 8, further comprising:
displaying a commodity details interface corresponding to the commodity information in response to a triggering operation to the commodity information in the broadcast information.

10. The method according to claim 8, further comprising:
displaying an account interface corresponding to an account information in response to a triggering operation to the account information in the live streaming page.

11. An apparatus for processing order information, comprising:
a first interface display module (1802), which is configured to display an order confirmation interface of a target commodity in response to an order generating instruction of the target commodity in a live streaming page, wherein the order confirmation interface is configured for displaying commodity attribute information of the target commodity and an order generating manner of the target commodity is a target generating manner; and
a second interface display module (1804), which is configured to display order processing information in response to a confirmation instruction on the order confirmation interface, the order processing information being used for indicating an order processing result of the target commodity.

12. The apparatus according to claim 11, wherein the apparatus further comprises:
an order editing interface display module, which is configured to display an order editing interface in response to an order editing instruction for the target commodity, and acquire edited commodity attribute information through the order editing interface.

13. The apparatus according to claim 11, wherein the first interface display module (1802) is further configured to:
display a target commodity control corresponding to the target commodity in the live streaming page, target commodity control being configured for indicating an order generating manner of the target commodity, and
display an order confirmation interface of the target commodity in response to an operation to the target commodity control, in a case that the target commodity control is triggerable.

14. The apparatus according to claim 13, wherein the target commodity control is used for indicating an order triggering time of the target commodity; and the first interface display module (1802) is further configured to:
setting target commodity control to be triggerable in response to the order triggering time arrives.

15. A non-transitory storage medium, wherein when an instruction in the non-transitory storage medium is executed by a processor (Z20) in an electronic device (Z00), the electronic device (Z00) is caused to perform the method for processing order information as defined in any one of claims 1 to 10.
